# EUROPEAN PATENT APPLICATION

(11) **EP 1 215 861 A2**
(43) Date of publication of application: **19.06.2002**
(21) Application number: 01308786.1
(22) Date of filing: 16.10.2001
(51) Int. Cl.: H04L 25/02

(54) **Switchable, resistive termination circuit**

(30) Priority: 15.12.2000 JP 2000382575
(71) Applicant: FUJITSU LIMITED, Kawasaki-shi, Kanagawa 211-8588 (JP)
(72) Inventor: Takauchi, Hideki, c/o Fujitsu Limited, Kawasaki-shi, Kanagawa 211-8588 (JP); Sasaki, Manabu, c/o Fujitsu Limited, Kawasaki-shi, Kanagawa 211-8588 (JP)
(74) Representative: Hitching, Peter Matthew

(57) **Abstract**

A termination resistor circuit (21), which is provided in an interface circuit through which signals are transferred, has a first termination resistor block (100) and a second termination resistor block (200). The second termination resistor block (200) differs in configuration from the first termination resistor block (100). The termination resistor circuit (21) is switched between the first termination resistor block (100) and the second termination resistor block (200). Therefore, the termination resistor circuit (21) can provide a highly versatile interface circuit.

## Description

The present invention relates to a termination resistor circuit and a signal transmission system, and more particularly, to a termination resistor circuit provided in an interface circuit through which signals are transferred at high speed between information processing devices or LSIs.

Recently, the need to transfer signals at high speed between various information processing devices, LSIs, etc. has been growing rapidly. In high-speed signal transmission, however, if signal reflections occur, the waveform will degrade and the signal may not be transmitted accurately. To address this, it is practiced to connect, at either the transmitting or receiving end of a transmission line, or at each end thereof, a resistor (termination resistor) equal in value to the characteristic impedance of the transmission line in order to eliminate signal reflections, thereby preventing waveform degradation and ensuring accurate signal transmission.

Such a termination resistor can be attached externally, for example, as a chip resistor, but this not only increases the number of devices to be arranged in the vicinity of an LSI, but can also lead to transmission signal reflections and degradation due to impedance mismatching. Specifically, when chip resistors or the like are attached externally as the termination resistors, the number of devices to be arranged in the vicinity of an LSI increases, which is not desirable in view of the recent trend toward higher integration. Furthermore, as the signal transmission speed increases, impedance mismatching tends to occur due to the packaging and the wiring between the termination resistors at the transmitting and receiving ends, causing transmission signal reflections and degradation.

On the other hand, in the case of a termination resistor built into an LSI or the like, since only one type of termination resistor circuit is built into it, the termination resistor circuit at either the transmitting end or the receiving end must be made to match the transmission signal level of the interface circuit; in other words, once the LSI is fabricated, the kind of interface circuit is uniquely determined. Specifically, when the termination resistors are incorporated into an LSI, since only one type of termination resistor circuit, the symmetric load type or the transfer gate type, is built into the LSI, the termination resistor circuit at either the transmitting end (the output end of the transmitter Tx) or the receiving end (the input end of the receiver Rx) must be made to match the transmission signal level of the interface circuit contained in the Tx or Rx; in other words, once the LSI is fabricated, the kind of interface circuit is uniquely determined. This greatly limits the freedom in interface circuit design, resulting in an inability to meet user needs or requiring extra manhours for the refabrication of the LSI.

Previously-considered termination resistor circuits and their associated problems will be described in detail later with reference to the drawings.

It is desirable to provide a termination resistor circuit that can provide a highly versatile interface circuit.

According to an embodiment of a first aspect of the present invention there is provided a termination resistor circuit, provided in an interface circuit through which signals are transferred, comprising a first termination resistor block; and a second termination resistor block which differs in configuration from the first termination resistor block, and wherein the termination resistor circuit is switched between the first termination resistor block and the second termination resistor block.

According to an embodiment of a second aspect of the present invention there is provided a signal transmission system comprising a transmitting circuit for transmitting a signal; a transmission line for transmitting the signal output from the transmitting circuit; and a termination resistor circuit connected to the transmission line and provided in an interface circuit through which signals are transferred, wherein the termination resistor circuit comprises a first termination resistor block; and a second termination resistor block which differs in configuration from the first termination resistor block, and wherein the termination resistor circuit is switched between the first termination resistor block and the second termination resistor block.

The first termination resistor block may have a symmetric load configuration comprising transistors of the same conductivity type; and the second termination resistor block may have a transfer gate configuration comprising transistors of different conductivity types. The first termination resistor block may comprise a first transistor and a second transistor, both being of a first conductivity type; and the second termination resistor block may comprise a third transistor of the first conductivity type and a fourth transistor of a second conductivity type which differs from the first conductivity type. A plurality of the first termination resistor blocks and a plurality of the second termination resistor blocks may be respectively arranged in parallel, and the plurality of first termination resistor blocks and the plurality of second termination resistor blocks may be respectively connected for control in an arbitrary manner.

The first and second transistors may be chosen to be substantially equal in size for each of the first termination resistor blocks so that the plurality of first termination resistor blocks have the same weight. The first and second transistors may be chosen to have an appropriate size for each of the first termination resistor blocks so that the plurality of first termination resistor blocks have respectively chosen appropriate weights.

The third and fourth transistors may be chosen to be substantially equal in size for each of the second termination resistor blocks so that the plurality of second termination resistor blocks have the same weight. The third and fourth transistors may be chosen to have an appropriate size for each of the second termination resistor blocks so that the plurality of second termination resistor blocks have respectively chosen appropriate weights. The first transistor and the third transistor may be replaced by one common transistor.

According to an embodiment of a third aspect of the present invention there is provided a signal transmission system comprising a transmission line for transmitting a signal; a receiving circuit for receiving the signal transmitted through the transmission line; and a termination resistor circuit connected to the transmission line and provided in an interface circuit through which signals are transferred, wherein the termination resistor circuit comprises a first termination resistor block; and a second termination resistor block which differs in configuration from the first termination resistor block, and wherein the termination resistor circuit is switched between the first termination resistor block and the second termination resistor block.

The first termination resistor block may be of a symmetric load configuration comprising transistors of the same conductivity type; and the second termination resistor block may be of a transfer gate configuration comprising transistors of different conductivity types. The first termination resistor block may comprise a first transistor and a second transistor, both being of a first conductivity type; and the second termination resistor block may comprise a third transistor of the first conductivity type and a fourth transistor of a second conductivity type which differs from the first conductivity type. A plurality of the first termination resistor blocks and a plurality of the second termination resistor blocks may be respectively arranged in parallel, and the plurality of first termination resistor blocks and the plurality of second termination resistor blocks may be respectively connected for control in an arbitrary manner.

According to an embodiment of a fourth aspect of the present invention there is provided a signal transmission system comprising a transmitting circuit for transmitting out a signal; a transmission line for transmitting therethrough the signal output from the transmitting circuit; a receiving circuit for receiving the signal transmitted from the transmitting circuit through the transmission line; and a termination resistor circuit connected to the transmission line and provided in an interface circuit through which signals are transferred, wherein the termination resistor circuit comprises a first termination resistor block; and a second termination resistor block which differs in configuration from the first termination resistor block, and wherein the termination resistor circuit is switched between the first termination resistor block and the second termination resistor block.

Reference will now be made, by way of example, to the accompanying drawings, in which:
Figure 1 is a diagram schematically showing one example of a signal transmission system in which termination resistors are provided at both ends of a transmission line;
Figure 2 is a diagram schematically showing another example of a signal transmission system in which termination resistors are provided at both ends of a transmission line;
Figures 3A and 3B are diagrams each showing an example of a symmetric load type termination resistor circuit;
Figure 4 is a diagram showing one example of a transfer gate type termination resistor circuit;
Figure 5 is a circuit diagram showing a first embodiment of a termination resistor circuit according to the present invention;
Figure 6 is a circuit diagram showing a second embodiment of a termination resistor circuit according to the present invention;
Figure 7 is a circuit diagram showing a third embodiment of a termination resistor circuit according to the present invention;
Figure 8 is a circuit diagram showing a fourth embodiment of a termination resistor circuit according to the present invention;
Figure 9 is a circuit diagram showing a fifth embodiment of a termination resistor circuit according to the present invention;
Figure 10 is a circuit diagram showing a sixth embodiment of a termination resistor circuit according to the present invention;
Figure 11 is a circuit diagram showing a seventh embodiment of a termination resistor circuit according to the present invention; and
Figure 12 is a circuit diagram showing an eighth embodiment of a termination resistor circuit according to the present invention.

Before describing in detail the preferred embodiments of the present invention, problems associated with previously-considered termination resistor circuits and signal transmission systems will be described first with reference to relevant drawings.

It has been previously considered to connect, at either the transmitting or receiving end of a transmission line, or at each end thereof, a termination resistor (resistance) equal in value to the characteristic impedance of the transmission line in order to eliminate signal reflections, thereby preventing waveform degradation and ensuring accurate signal transmission. When connecting the resistance equal in value to the characteristic impedance of the transmission line in an interface circuit, two termination methods are generally known. One is to connect the resistance (as an external resistor circuit) outside the LSI, and the other is to incorporate the resistance (as a built-in resistor circuit) into the LSI.

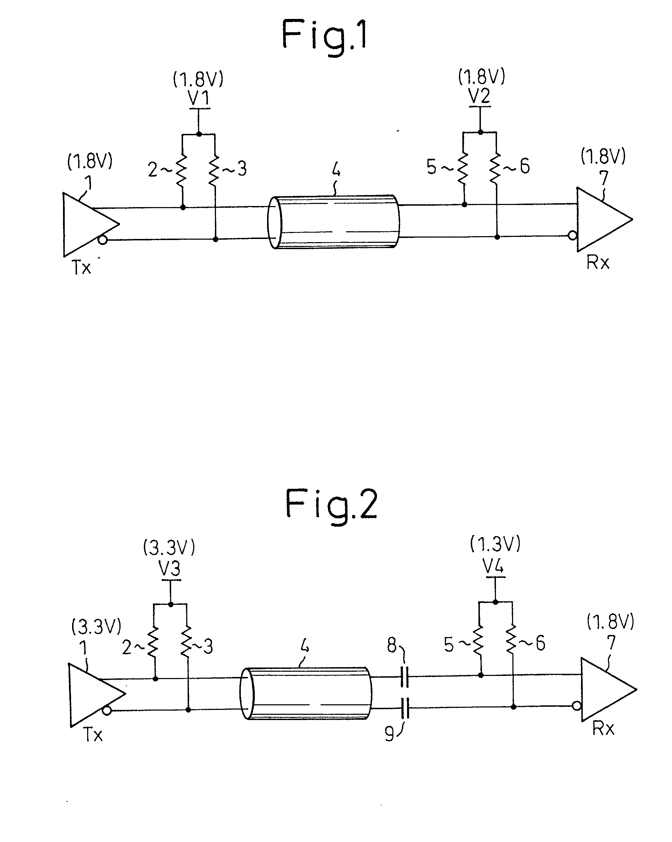

Figure 1 is a diagram schematically showing one example of a signal transmission system in which termination resistors are provided at both ends of a transmission line; in this specific example, termination resistor circuits are connected to both ends of a transmission line used in a CML (Current Mode Logic) type interface circuit. In Figure 1, reference numeral 1 is a transmitter (Tx), 7 is a receiver (Rx), 4 is a signal transmission line, and 2, 3, 5, and 6 are termination resistors. The transmitter 1 and the receiver 7 operate on the same supply voltage (for example, 1.8 V), and signals are transmitted as complementary signals (differential signals).

In the signal transmission system shown in Figure 1, the characteristic impedance of the transmission line 4 is, for example, designed to be 50 Ω, so that the termination resistors 2, 3, 5, and 6 must also be chosen to have a resistance value of 50 Ω. When connecting the termination resistors 2, 3, 5, and 6 outside the LSIs (transmitter 1 and receiver 7), commercially available devices such as chip resistors are attached externally; on the other hand, when incorporating them into the LSIs, symmetric load type termination resistor circuits each constructed, for example, from P-channel MOS transistors (PMOS transistors), as will be described later, are built into the respective LSIs. In the signal transmission system shown here, in the case of a CML interface, the supply voltage applied as the reference voltage V1 is the same in magnitude (for example, 1.8 V) as that applied as the reference voltage V2.

Figure 2 is a diagram schematically showing another example of a signal transmission system in which termination resistors are provided at both ends of a transmission line. The signal transmission system shown in Figure 2 differs from the signal transmission system in that the transmitter 1 and the receiver 7 operate on different supply voltages; for example, the transmitter 1 is configured to operate on a supply voltage of 3.3 V and output a CML level transmission signal of 3.3 V, while the receiver 7 is configured to operate on a supply voltage of 1.8 V and be able to receive a CML level transmission signal of 1.8 V. In Figure 2, reference numerals 8 and 9 are capacitors for capacitive coupling for changing the common mode of the transmission signal.

In the signal transmission system shown in Figure 2, the characteristic impedance of the transmission line 4 is, for example, designed to be 50 Ω, so that the termination resistors 2, 3, 5, and 6 must also be chosen to have a resistance value of 50 Ω. When connecting the termination resistors 2, 3, 5, and 6 outside the LSIs, commercially available devices such as chip resistors are attached externally, as in the signal transmission system of Figure 1 described above.

On the other hand, when incorporating the termination resistors into the LSIs, a symmetric load type termination resistor circuit constructed from PMOS transistors is built in as the termination resistors 2 and 3 at the transmitter side, and a transfer gate type termination resistor circuit constructed from N-channel MOS transistors (NMOS transistors), as will be described later, is built in as the termination resistors 5 and 6 at the receiver side. In the signal transmission system shown here, a voltage of 3.3 V, for example, is applied as the reference voltage V3, and 1.3 V is applied as the reference voltage (received common-mode voltage) V4.

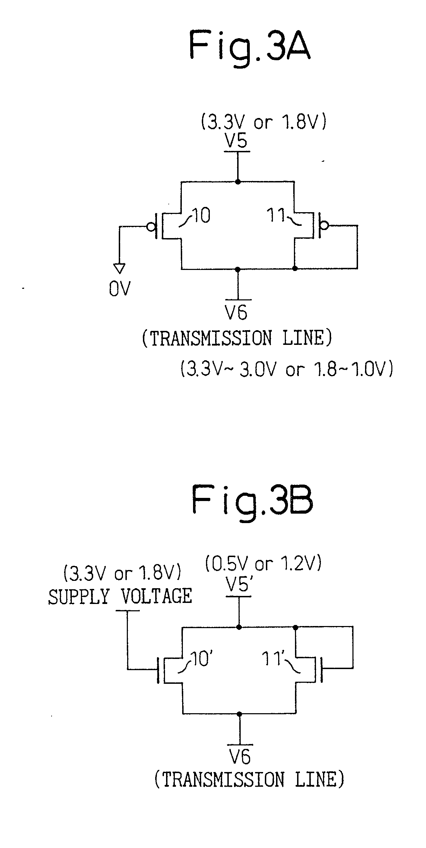

Figures 3A and 3B are diagrams each showing an example of a symmetric load type termination resistor circuit: Figure 3A shows a symmetric load type termination resistor circuit constructed from two PMOS transistors 10 and 11, and Figure 3B shows a symmetric load type termination resistor circuit constructed from two NMOS transistors 10' and 11'.

In the symmetric load type termination resistor circuit constructed from two PMOS transistors shown in Figure 3A, the sources and drains of the respective transistors 10 and 11 are respectively connected together, and a supply voltage V5 (for example, 3.3 V or 1.8 V) is applied to their sources, while their drains are connected to the transmission line (V6). Here, the gate of one transistor 10 is connected to ground potential (for example, 0 V), and the gate and drain of the other transistor 11 are connected together, i.e., diode-connected.

The realistic operating range of the symmetric load type termination resistor shown in Figure 3A is where the transmission line signal (voltage V6) is between supply voltage and supply voltage minus 0.8 V (for example, between 3.3 V and 2.5 V or between 1.8 V and 1.0 V); at voltages lower that, the PMOS transistors exhibit high resistance, and the termination resistance value becomes difficult to maintain.

In the symmetric load type termination resistor circuit shown in Figure 3B, the PMOS transistors 10 and 11 in the termination resistor circuit of Figure 3A are replaced by the NMOS transistors 10' and 11', and a reference supply voltage V5' (for example, 0.5 V or 1.2 V depending on signal amplitude) is applied to the common drain of the transistors 10' and 11', while their common source is connected to the transmission line (V6). This configuration also involves the same problem as described above.

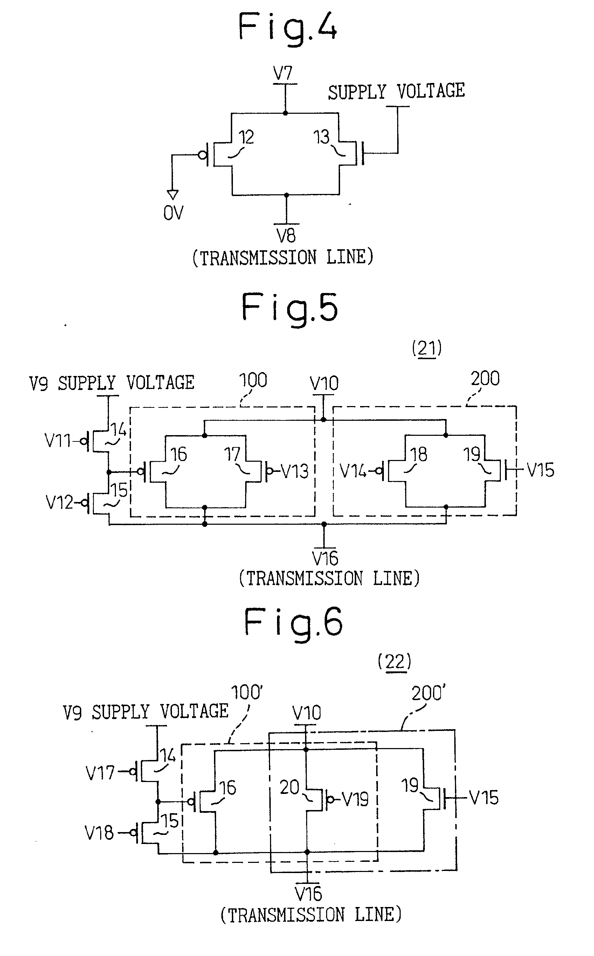

Figure 4 is a diagram showing one example of a transfer gate type termination resistor circuit.

The transfer gate type termination resistor circuit shown in Figure 4 comprises a PMOS transistor 12 and an NMOS transistor 13, and the source of the transistor 12 and the drain of the transistor 13 are coupled together and connected to a reference voltage V7 (for example, 1.3 V), while the drain of the transistor 12 and the source of the transistor 13 are coupled together and connected to the transmission line (V8). Here, the gate of the transistor 12 is connected to ground potential (for example, 0 V), while the gate of the transistor 13 is supplied with the supply voltage (for example, 1.8 V).

The transfer gate type termination resistor circuit such as that shown in Figure 4 is operated in the vicinity of one half of the supply voltage (for example, 0.9 V), that is, (V7+V8)/2 at which each transistor is operating. This termination resistor circuit acts as a resistor at any voltage within that voltage range, but near the supply voltage, only the NMOS transistor 13 operates, while near 0 V, only the PMOS transistor 12 operates; as a result, the transistor that is not operating becomes a capacitive load, and this limits the circuit operation of the transmitter 1 or receiver 7.

As described above, when chip resistors or the like are attached externally as the termination resistors, the number of devices to be arranged in the vicinity of an LSI increases, which is not desirable in view of the recent trend toward higher integration. Furthermore, as the signal transmission speed increases, impedance mismatching tends to occur due to the packaging and the wiring between the termination resistors at the transmitting and receiving ends, causing transmission signal reflections and degradation.

On the other hand, when the termination resistors are incorporated into an LSI, since only one type of termination resistor circuit, the symmetric load type or the transfer gate type, is built into the LSI, the termination resistor circuit at either the transmitting end (the output end of the transmitter Tx) or the receiving end (the input end of the receiver Rx) must be made to match the transmission signal level of the interface circuit contained in the Tx or Rx; in other words, once the LSI is fabricated, the kind of interface circuit is uniquely determined. This greatly limits the freedom in interface circuit design, resulting in an inability to meet user needs or requires extra manhours for the refabrication of the LSI.

Embodiments of a termination resistor circuit and a signal transmission system according to the present invention will be described below with reference to the accompanying drawings.

Figure 5 is a circuit diagram showing a first embodiment of a termination resistor circuit according to the present invention. In Figure 5, reference numeral 100 is a symmetric load type termination resistor block, and 200 is a transfer gate type termination resistor block.

As shown in Figure 5, the termination resistor circuit comprises the symmetric load type termination resistor block 100 and transfer gate type termination resistor block 200. The symmetric load type termination resistor block 100 is constructed from PMOS transistors 16 and 17, while the transfer gate type termination resistor block 200 is constructed from a PMOS transistor 18 and an NMOS transistor 19. PMOS transistors 14 and 15 are used to control (connect or disconnect) the transistor 16, and act as switches operated by respective control signals (V11 and V12).

In Figure 5, voltage V9 is a supply voltage (for example, 1.8 V), while voltage V10 is set as a supply voltage (for example, 1.8 V) when the transmission line is directly connected as in the signal transmission system of Figure 1, or as a reference voltage (for example, 1.3 V) that matches the receiving voltage range of the receiver 7 when the termination resistor circuit is used as the termination resistors 5 and 6 and when the transmission line is capacitively coupled as in the signal transmission system of Figure 2. Voltage V16 is the signal voltage of the transmission line. Voltages (signals) V11 to V15 are control signals used to determine which type of termination resistor block (circuit), the symmetric load type or the transfer gate type, is to be enabled. The voltage logic for operation is shown in Table 1 below. In Table 1, reference character "L" is, for example, 0 V, and "H" is 1.8 V. The supply voltage is 1.8 V, and the reference voltage is 1.3 V.

**[TABLE 1]**

| | V10 | V11 | V12 | V13 | V14 | V15 | V16 |
|---|---|---|---|---|---|---|---|
| SYMMETRIC LOAD TYPE TERMINATION RESISTOR CIRCUIT | SUPPLY VOLTAGE | H | L | L | H | L | TRANSMISSION LINE |
| TRANSFER GATE TYPE TERMINATION RESISTOR CIRCUIT | REFERENCE VOLTAGE | L | H | H | L | H | TRANSMISSION LINE |

By performing control as shown in Table 1 above, the termination resistor circuit shown in Figure 5 can be set up as the symmetric load type or the transfer gate type, whichever type is desired, and thus a highly versatile termination resistor circuit adaptable for use with various kinds of interfaces can be readily obtained.

Figure 6 is a circuit diagram showing a second embodiment of a termination resistor circuit according to the present invention.

In the termination resistor circuit shown in Figure 6, the two PMOS transistors 17 and 18 in the termination resistor circuit of Figure 5 are replaced by one common PMOS transistor 20. That is, the symmetric load type termination resistor block 100' is constructed from PMOS transistors 16 and 20, and the transfer gate type termination resistor block 200' is constructed from the PMOS transistor 20 and NMOS transistor 19. PMOS transistors 14 and 15 are used to control (connect or disconnect) the transistor 16, and act as switches operated by respective control signals (V17 and V18).

In Figure 6, voltage V9 is a supply voltage (for example, 1.8 V), while voltage V10 is set as a supply voltage (for example, 1.8 V) when the transmission line is directly connected as in the signal transmission system of Figure 1, or as a reference voltage (for example, 1.3 V) when the transmission line is capacitively coupled as in the signal transmission system of Figure 2. Voltage V16 is the signal voltage of the transmission line. Voltages (signals) V15 and V17 to V19 are control signals used to determine which type of termination resistor circuit, the symmetric load type or the transfer gate type, is to be enabled. The voltage logic for operation is shown in Table 2 below. In Table 2 also, reference character "L" is, for example, 0 V, and "H" is 1.8 V. The supply voltage is 1.8 V, and the reference voltage is 1.3 V.

**[TABLE 2]**

| | V10 | V17 | V18 | V19 | V15 | V16 |
|---|---|---|---|---|---|---|
| SYMMETRIC LOAD TYPE TERMINATION RESISTOR CIRCUIT | SUPPLY VOLTAGE | H | L | L | L | TRANSMISSION LINE |
| TRANSFER GATE TYPE TERMINATION RESISTOR CIRCUIT | REFERENCE VOLTAGE | L | H | L | H | TRANSMISSION LINE |

By performing control as shown in Table 2 above, the termination resistor circuit shown in Figure 6 can be set up as the symmetric load type or the transfer gate type, whichever type is desired, and thus a highly versatile termination resistor circuit adaptable for use with various kinds of interfaces can be readily obtained. Furthermore, the termination resistor circuit of the second embodiment achieves a reduction in the number of devices used, compared with the termination resistor circuit of the foregoing first embodiment.

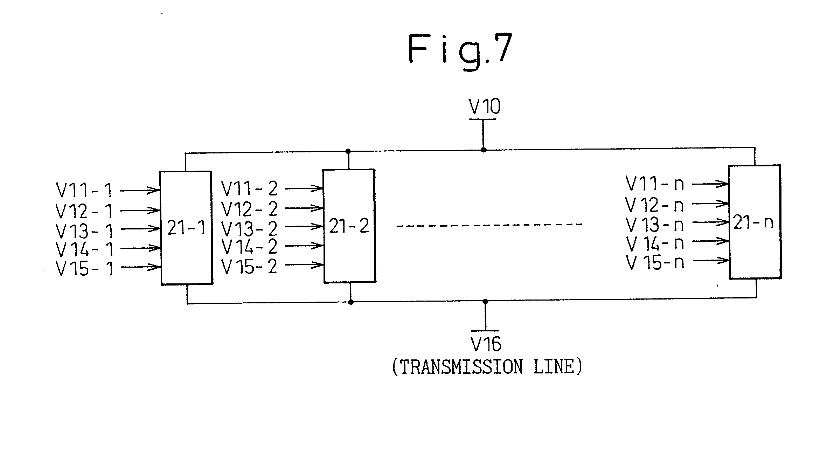

Figure 7 is a circuit diagram showing a third embodiment of a termination resistor circuit according to the present invention. In Figure 7, reference numerals 21-1 to 21-n each indicate the termination resistor circuit (21) of the first embodiment shown in Figure 5.

As shown in Figure 7, the termination resistor circuit of the third embodiment comprises the number, n, of termination resistor units (each corresponding to the termination resistor circuit shown in Figure 5) arranged between the voltage terminal V10 and the transmission line V16, and the termination resistor units 21-1 to 21-n are controlled by control voltages V11-1, V12-1, V13-1, V14-1, and V15-1 to V11-n, V12-n, V13-n, V14-n, and V15-n, respectively. It will be recognized here that controlling the respective termination resistor units 21-1 to 21-n by the control voltages V11-1, V12-1, V13-1, V14-1, and V15-1 to V11-n, V12-n, V13-n, V14-n, and V15-n also includes performing control to deactivate the respective termination resistor units.

Control of the respective termination resistor units 21-1 to 21-n (control performed to determine which type of termination resistor circuit, the symmetric load type or the transfer gate type, is to be enabled) may be performed for each individual termination resistor unit; alternatively, the circuit may be configured so that an arbitrary number of termination resistor units are, for example, grouped together and controlled by the same set of control voltages.

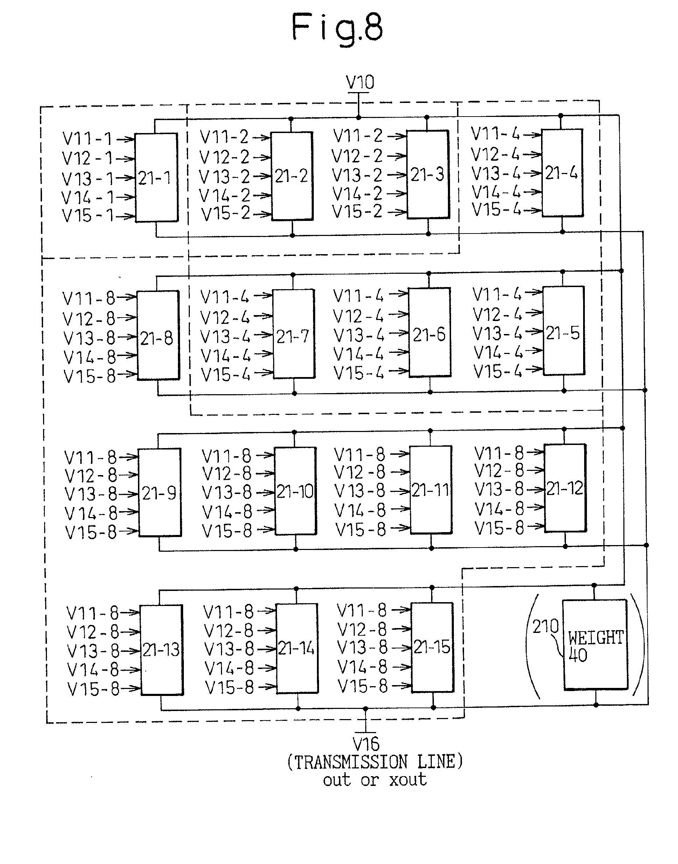

Figure 8 is a circuit diagram showing a fourth embodiment of a termination resistor circuit according to the present invention; in this embodiment, the circuit is configured so that an arbitrary number of termination resistor units are grouped together and controlled by the same set of control voltages, as just described. Among the respective termination resistor units 21-1 to 21-n, the transistors (transistors 16 to 19 in Figure 5) are chosen to be equal in size.

More specifically, as shown in Figure 8, the termination resistor circuit of the fourth embodiment is configured so that one termination resistor unit 21-1 is controlled by the control voltages V11-1, V12-1, V13-1, V14-1, and V15-1, two termination resistor units 21-2 and 21-3 are controlled by the same set of control voltages V11-2, V12-2, V13-2, V14-2, and V15-2, four termination resistor units 21-4, 21-5, 21-6, and 21-7 are controlled by the same set of control voltages V11-4, V12-4, V13-4, V14-4, and V15-4, and eight termination resistor units 21-8 to 21-15 are controlled by the same set of control voltages V11-8, V12-8, V13-8, V14-8, and V15-8. In this way, in the termination resistor circuit of the fourth embodiment, the termination resistor units, each with the same weight (weight = 1), are divided into groups of one, two, four, eight, sixteen, etc. and the termination register units within the same group are controlled by the same set of control voltages.

In the fourth embodiment shown in Figure 8, it is also possible to provide a termination resistor unit 210 having a prescribed weight (for example, weight = 40), which is used to make a coarse adjustment of the resistance value of the termination resistor circuit; in this case, fine adjustments are made using the other termination resistor units 21-1 to 21-15. The weight of the termination resistor unit 210 used for the coarse adjustment of the resistance value of the termination resistor circuit is determined by considering, for example, manufacturing variations, etc. The termination resistor unit 210 may be constructed using resistive elements.

Besides making the transistor size equal for each of the termination resistor units 21-1 to 21-n and adjusting the resistance value of the termination resistor circuit by varying the number of termination resistor units controlled (activated), the circuit can also be constructed so that each termination resistor unit is individually weighted (for example, transistor gate length is set individually for each termination resistor unit), and so that the resistance value of the termination resistor circuit is adjusted by adjusting the total weight of the termination resistor units controlled. Further, the termination resistor units can be weighted in the ratio of 1:2:4:8:16:..., but instead, they may be weighted in the ratio of 1:2:2:2:2:..., for example. The reason that the termination resistor units are weighted, for example, in the ratio of 1:2:2:2:2:... is that weight variations due to manufacturing variations, etc. can then be evened out.

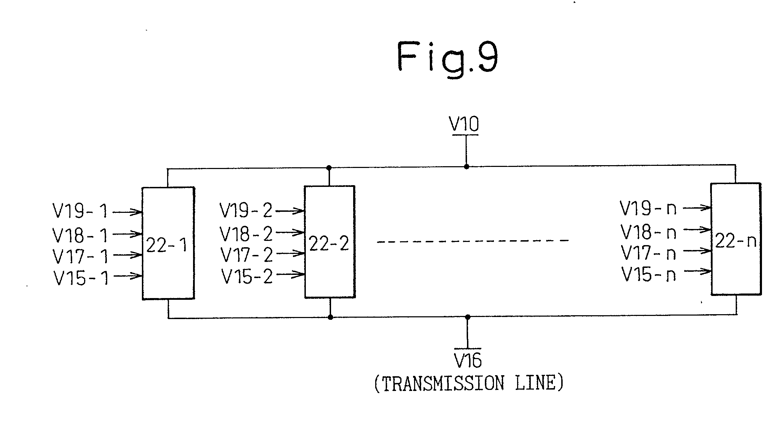

Figure 9 is a circuit diagram showing a fifth embodiment of a termination resistor circuit according to the present invention. In Figure 9, reference numerals 21-1 to 21-n each indicate the termination resistor circuit (22) of the second embodiment shown in Figure 6.

As shown in Figure 9, the termination resistor circuit of the fifth embodiment comprises the number, n, of termination resistor units (each corresponding to the termination resistor circuit shown in Figure 6) arranged between the voltage terminal V10 and the transmission line V16, and the termination resistor units 21-1 to 21-n are controlled by control voltages V15-1, V17-1, V18-1, and V19-1 to V15-n, V17-n, V18-n, and V19-n, respectively.

The termination resistor units 21-1 to 21-n may be controlled individually, or an arbitrary number of termination resistor units may be grouped together and controlled by the same set of control voltages. Further, the adjustment of the termination resistor circuit can be accomplished by controlling the number of termination resistor units or the total weight. These features are the same as those of the foregoing embodiment.

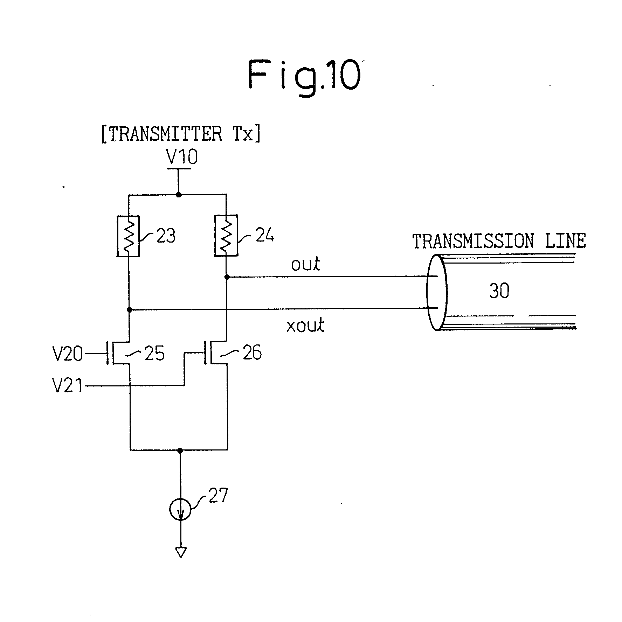

Figure 10 is a circuit diagram showing a sixth embodiment of a termination resistor circuit according to the present invention, in which termination resistor circuits 23 and 24 (for example, the termination resistor circuit shown in Figure 8) are applied for use in a current-controlled transmitter (Tx). In Figure 10, reference characters V20 and V21 are differential signals, 25 and 26 are NMOS transistors which perform ON/OFF operations in a complementary manner, 27 is a constant-current source, 30 is a signal transmission line, and "out" and "xout" are differential output signals of the transmitter.

As shown in Figure 10, in the sixth embodiment, the termination resistor circuits 24 and 23 are provided for the respective differential signal (complementary signal) outputs "out" and "xout" of the transmitter. Then, by controlling the control voltages V11-1, V12-1, V13-1, V14-1, V15-1; V11-2, V12-2, V13-2, V14-2, V15-2; V11-4, V12-4, V13-4, V14-4, V15-4;... in the termination resistor circuits 24 and 23, the resistance value of each of the termination resistor circuits 24 and 23 is accurately controlled to the desired value (for example, 50 Ω).

The voltage V10 is set as the supply voltage (for example, 3.3 V) when it is desired to produce CML outputs, or as the reference voltage (for example, 1.3 V) when it is desired to change the common mode. The termination resistor circuits 23 and 24 can each be constructed using, for example, the termination resistor circuit described with reference to Figure 8.

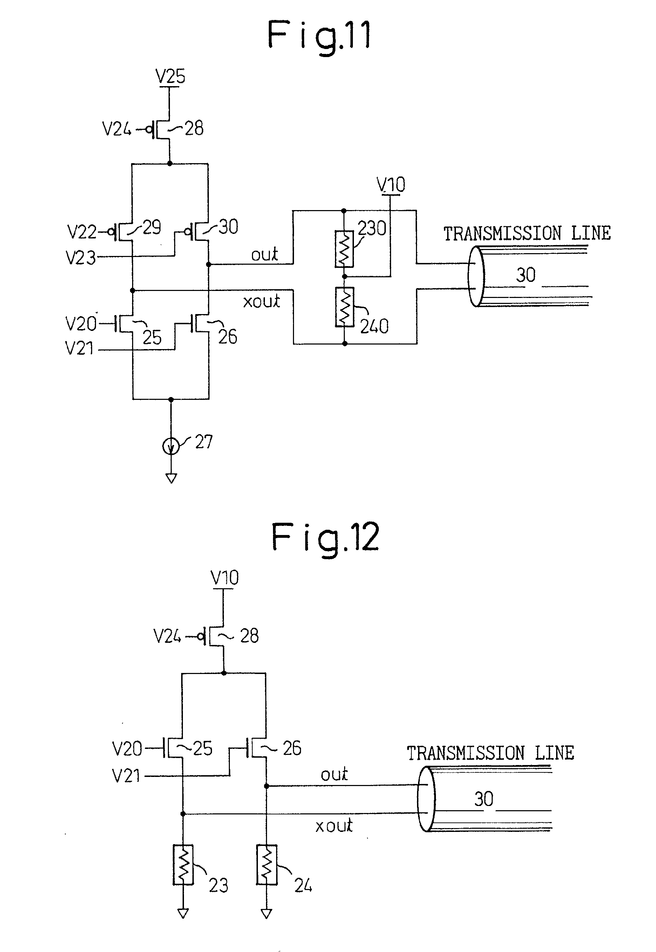

Figure 11 is a circuit diagram showing a seventh embodiment of a termination resistor circuit according to the present invention.

First, when using the transmitter (Tx) for an LVDS (Low Voltage Differential Signal), a voltage for operating the PMOS transistor 28 as a constant-current source is applied at voltage V24. For an LVDS, when the positive logic output "out" produces the H level (for example, 1.4 V) and the negative logic output "xout" produces the L level (for example, 0.8 V), the voltages V20 and V22 are set to the H level to turn on the transistor 25 and turn off the transistor 29, while the voltages V21 and V23 are set to the L level to turn off the transistor 26 and turn on the transistor 30. Conversely, for an LVDS, when the positive logic output "out" produces the L level and the negative logic output "xout" the H level, the voltages V20 and V22 are set to the L level to turn off the transistor 25 and turn on the transistor 29, while the voltages V21 and V23 are set to the H level to turn on the transistor 26 and turn off the transistor 30. Here, the supply voltage is applied at the voltage V25, and no voltage is applied at the voltage V10. At this time, since the differential outputs "out" and "xout" are at intermediate potential, the termination resistors 230 and 240 are controlled so that the transfer gate type is selected.

Next, when using the transmitter (Tx) for CML, the transistor 28 is not operated as a constant-current source, and the transistors 28, 29, and 30 are constantly held in the ON state. In the CML level, when the positive logic output "out" produces the H level and the negative logic output "xout" the L level, the voltage V20 is set to the L level to turn off the transistor 25, while the voltage V21 is set to the H level to turn on the transistor 26. Conversely, in the CML level, when the positive logic output "out" produces the L level and the negative logic output "xout" the H level, the voltage V20 is set to the H level to turn on the transistor 25, while the voltage V21 is set to the L level to turn off the transistor 26. Here, the supply voltage is applied at the voltage V25, and also at the voltage V10. At this time, since the differential outputs "out" and "xout" are near the supply voltage, the termination resistors 230 and 240 are controlled so that the symmetric load type is selected.

In this way, the termination resistor circuit of the seventh embodiment can be adapted for use with different types of interface without modifying the circuit.

Figure 12 is a circuit diagram showing an eighth embodiment of a termination resistor circuit according to the present invention. This embodiment is a modification of the sixth embodiment previously shown in Figure 10. In Figure 12, the transistor indicated by reference numeral 28 acts as a constant-current source by being supplied with the voltage V24, and corresponds to the constant-current source 27 in Figure 10.

However, in the sixth embodiment shown in Figure 10, the termination resistor circuits 24 and 23 are provided in such a manner as to pull up the differential outputs "out" and "xout", the eighth embodiment differs in that the termination resistor circuits 24 and 23 are provided in such a manner as to pull down the differential outputs "out" and "xout".

In each of the above-described embodiments, the symmetric load type termination resistor circuit has been described by dealing primarily with one comprising PMOS transistors such as shown in Figure 3A, but it will be appreciated that the symmetric load type termination resistor circuit comprising NMOS transistors such as shown in Figure 3B may also be used.

As described above, since the present invention is capable of eliminating the need for external resistors and is readily adaptable for different termination methods, a highly versatile interface circuit can be obtained. As a result, not only can a wide variety of user needs be satisfied, but an increase in the manhours required to design the.circuit can also be suppressed. Furthermore, according to an embodiment of the present invention, the resistance value of the termination resistor circuit can be adjusted to the desired value regardless of manufacturing variations.

As described in detail above, according to an embodiment of the present invention, a highly versatile termination resistor circuit can be achieved with simple circuitry.

Many different embodiments of the present invention may be constructed without departing from the scope of the present invention, and it should be understood that the present invention is not limited to the specific embodiments described in this specification, except as defined in the appended claims.

## Claims

1. A termination resistor circuit, provided in an interface circuit through which signals are transferred, comprising:
a first termination resistor block; and
a second termination resistor block which differs in configuration from said first termination resistor block, and wherein:
said termination resistor circuit is switched between said first termination resistor block and said second termination resistor block.

2. The termination resistor circuit as claimed in claim 1, wherein:
said first termination resistor block is of a symmetric load configuration comprising transistors of the same conductivity type; and
said second termination resistor block is of a transfer gate configuration comprising transistors of different conductivity types.

3. The termination resistor circuit as claimed in claim 1 or 2, wherein:
said first termination resistor block comprises a first transistor and a second transistor, both being of a first conductivity type; and
said second termination resistor block comprises a third transistor of the first conductivity type and a fourth transistor of a second conductivity type which differs from said first conductivity type.

4. The termination resistor circuit as claimed in claim 3, wherein a plurality of said first termination resistor blocks and a plurality of said second termination resistor blocks are respectively arranged in parallel, and said plurality of first termination resistor blocks and said plurality of second termination resistor blocks are respectively connected for control in an arbitrary manner.

5. The termination resistor circuit as claimed in claim 4, wherein said first and second transistors are chosen to substantially be equal in size for each of said first termination resistor blocks so that said plurality of first termination resistor blocks have the same weight.

6. The termination resistor circuit as claimed in claim 4, wherein said first and second transistors are chosen to have an appropriate size for each of said first termination resistor blocks so that said plurality of first termination resistor blocks have respectively chosen appropriate weights.

7. The termination resistor circuit as claimed in claim 4, 5 or 6, wherein said third and fourth transistors are chosen to be substantially equal in size for each of said second termination resistor blocks so that said plurality of second termination resistor blocks have the same weight.

8. The termination resistor circuit as claimed in claim 4, 5 or 6, wherein said third and fourth transistors are chosen to have an appropriate size for each of said second termination resistor blocks so that said plurality of second termination resistor blocks have respectively chosen appropriate weights.

9. The termination resistor circuit as claimed in any one of claims 3 to 8, wherein said first transistor and said third transistor are replaced by one common transistor.

10. A signal transmission system comprising:
a transmitting circuit for transmitting a signal;
a transmission line for transmitting the signal output from said transmitting circuit; and
a termination resistor circuit as claimed in any preceding claim connected to said transmission line.

11. A signal transmission system comprising:
a transmission line for transmitting a signal;
a receiving circuit for receiving the signal transmitted through said transmission line; and
a termination resistor circuit as claimed in any one of claims 1 to 9 connected to said transmission line.

12. A signal transmission system comprising:
a transmitting circuit for transmitting out a signal;
a transmission line for transmitting therethrough the signal output from said transmitting circuit;
a receiving circuit for receiving the signal transmitted from said transmitting circuit through said transmission line; and
a termination resistor circuit as claimed in any one of claims 1 to 9 connected to said transmission line.

13. An integrated circuit device having a termination resistor circuit as claimed in any one of claims 1 to 9 provided in an output portion of the interface circuit.

14. An integrated circuit device having a termination resistor circuit as claimed in any one of claims 1 to 9 provided in an input portion of the interface circuit.
